# EUROPEAN PATENT APPLICATION

(11) **EP 1 245 317 A1**
(43) Date of publication of application: **02.10.2002**
(21) Application number: 02425167.0
(22) Date of filing: 15.03.2002
(51) Int. Cl.: B23C 5/06, B23Q 1/01, B64C 1/12, B64F 5/00

(54) **A process and apparatus for manufacturing products of defined thickness**

(30) Priority: 27.03.2001 IT BO20010180
(71) Applicant: Jobs S.p.A., 29100 Piacenza (IT)
(72) Inventor: Schiavi, Bruno, 29100 Piacenza (IT); Massari, Carlo, 29012 San Giorgio (Piacenza) (IT)
(74) Representative: Lanzoni, Luciano

(57) **Abstract**

The apparatus (1) for making products (2) of defined thickness to be used to make parts (17) of aerospace structures comprises an automatic machine tool (3) and a frame (4) for supporting the products (2) being processed. The machine tool (3) comprises a machining unit (6) equipped with a head (8) that mounts a tool (25) designed to remove material from defined areas (26, 27, 28) of the product (2) in such a way as to selectively reduce its thickness.

## Description

The present invention relates to a process for manufacturing products of defined thickness.

In particular, but without restricting the scope of the inventive concept, the present invention relates to a process for mechanically and selectively reducing the thickness of parts of aerospace structures made from metal sheets.

This is done to lighten the metal sheeting used to make the parts of the aircraft, for example, the fuselage, which are not required to resist very high stress and strain during use.

Prior art methods for lightening the metal sheeting are based substantially on a process known as "chemical milling". This consists in spray coating the metal sheet with a masking material (maskant) in such a way as to form a protective layer on it. A pattern is subsequently cut into this coating, manually or with a laser instrument, to distinguish the parts of the metal sheet that have to be lightened from those whose thickness is to be left substantially unchanged. The maskant, which dries to a continuous film, is then removed from the parts to be lightened and the metal sheet is lowered into a tank containing a chemical which erodes the metal in the parts not protected by the maskant. The metal sheet is left in the tank for a preset time and then lifted out and washed, depending on the amount of material to be removed. This process is carried out gradually. Therefore, if some parts of the metal sheet have to be further lightened, the process is repeated until all parts of it have the required thickness.

The process described above has several disadvantages. First of all, owing to the large size of the metal sheets normally used in the aeronautical industry, the production plant where the metal sheets are processed have to be extremely large and, consequently, involve very high costs.

Another disadvantage of this type of process is that it requires large quantities of chemicals which, besides being dangerous for operators, need special storage and waste disposal facilities which involve considerable investments not only for their construction but also to keep in them in efficient working conditions according to the safety standards required by current legislation.

The chemical erosion process used to manufacture metal products has the further disadvantage of producing metallic sludge that is difficult to recycle.

The present invention therefore has for an object to provide a process for manufacturing products of defined thickness that overcomes the above mentioned disadvantages.

Accordingly, the present invention provides a process for manufacturing products of defined thickness used as parts in spacecraft or aircraft structures, the process being characterised in that it comprises at least the step of mechanically removing the material of which the product is made at least from defined and separate areas of the product in order to reduce the thickness of and thus lighten the product.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic perspective view, with some parts cut away in order to better illustrate others, of an apparatus used to manufacture products according to the present invention;
- Figure 2 is a perspective view of a detail from Figure 1 and illustrates a step in the work performed by the apparatus;
- Figure 3 is a front view, with some parts cut away in order to better illustrate others, of the apparatus shown in Figure 1;
- Figure 4 is a front view, with some parts cut away in order to better illustrate others, of another embodiment of the apparatus shown in Figure 1.

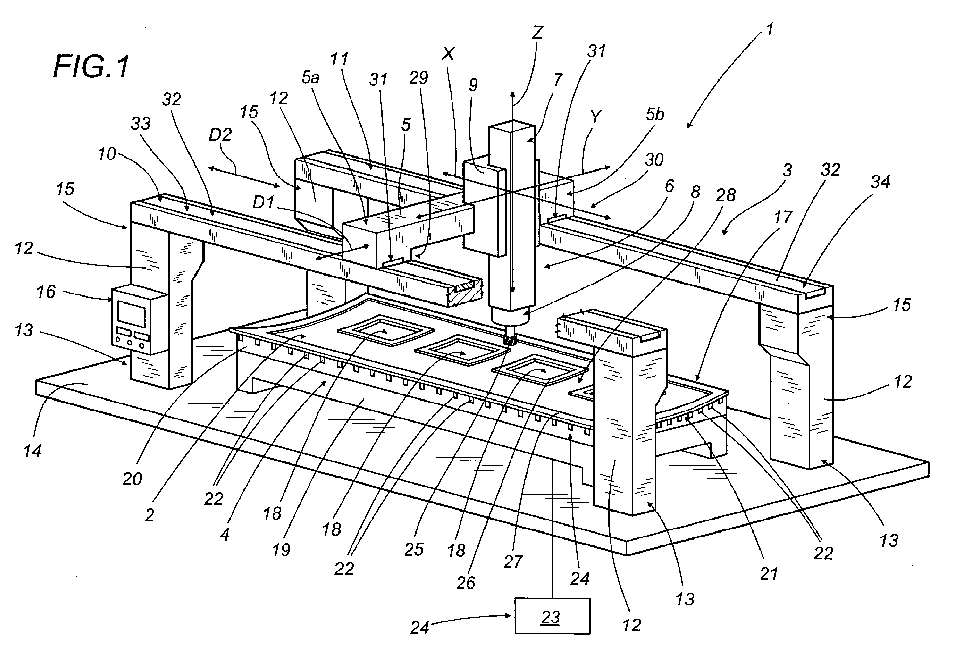

With reference to Figure 1, the numeral 1 denotes in its entirety an apparatus for manufacturing products 2 and comprising an automatic machine tool 3 and a frame 4 that supports the products 2 being processed.

The automatic machine tool 3 comprises a mobile crossbeam 5 that mounts a machining unit 6.

The machining unit 6 can move in three-dimensional space along the three linear axes X, Y and Z of a Cartesian system. The machining unit 6, illustrated schematically in the accompanying drawings, may also have three continuous interpolation axes, or three continuous interpolation axes and two positioning axes, or five or more continuous interpolation axes.

As shown in Figure 1, the machining unit 6, which is of conventional type and therefore not illustrated in detail, comprises a slide 7 that mounts a tool holder head 8. The latter is slidably engaged with a supporting element 9 in which it runs in the direction Z.

The supporting element 9 can move in the direction Y relative to the crossbeam 5 through customary driving means which are not described in further detail.

The crossbeam 5 extends in a principal direction D1 that is substantially parallel to the Y-axis of the Cartesian reference system.

The crossbeam 5 is supported by two longitudinal guides 10, 11 extending in a principal direction D2 that is substantially parallel to the direction X, the guides 10, 11 being supported by a plurality of columns 12.

The columns 12 have respective lower ends 13 connected to a base 14 of the machine tool 3 and respective upper ends 15 connected to the longitudinal guides 10, 11.

The crossbeam 5 can slide in the longitudinal guides 10, 11 in the direction D2 so as to guide the machining unit 6 in the movements the latter is required to perform in order to machine the product 2 in the automatic machine tool 3.

The machine tool 3 further comprises a numerical control unit 16, located at one of the columns 12 and designed to control the machining unit 6 so that the machine 3 can perform the required machining operations.

As shown in Figure 1, the product 2 is, for example, a part 17 that will be used to make the fuselage of an aeroplane and where the openings for the windows of the aeroplane are labelled 18.

Looking in more detail, the part 17 has a given curvature previously applied on a substantially flat length of material, such as, for example, a metal sheet using customary forming devices which are not described.

The frame 4 supporting the product 2 is positioned inside the space delimited by the columns 12 of the automatic machine tool 3, under the machining unit 6.

The frame 4 is in the form of a table and comprises a base 19 that is substantially fixed relative to the bed 14 of the machine tool 3 and a detachable part 20 that is connected to the base 19 and having an upper face 21.

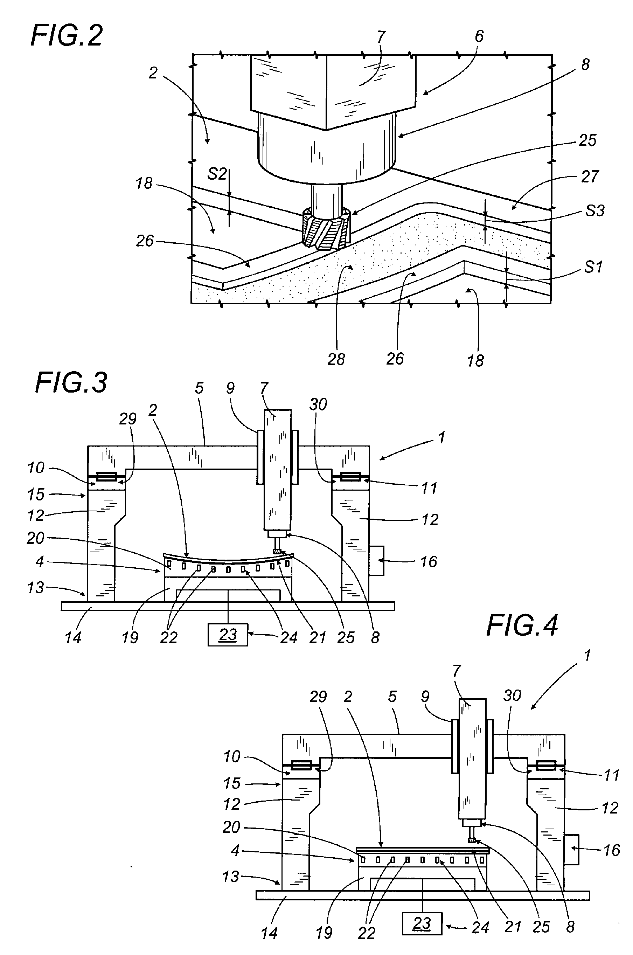

As shown also in Figure 3, a product 2 with a given curvature is positioned on the upper face 21 of the frame 4, the upper face 21 being shaped to match the curvature of the product 2.

Figure 4 shows a product 2 that is substantially flat positioned on the upper face 21 of the frame 4, the upper face 21 also being substantially flat. With reference to Figures 1, 3 and 4, the frame 4 comprises a plurality of suction holes 22 distributed on its upper face 21 and designed to hold the product 2 down against the face 21 when the product 2 is placed on the frame 4 for machining.

The suction holes 22 are connected to a customary suction device which is schematically illustrated as a block 23 in the drawings.

The suction holes 22 and the suction device 23 together constitute suction means 24.

The upper face 21 of the frame 4, thanks to its secure hold on the product 2 through the suction means 24, constitutes a positioning reference element for the product 2 and a geometric reference for measuring the machining dimensions.

Figure 2 is an enlarged detail view showing a stage in the machining of the product 2 by a tool 25 mounted on the tool holder head 8 of the machining unit 6. In the illustration, the tool 25 is removing material from a frame 26 of one of the openings 18 for the aeroplane windows. In the example illustrated, each frame 26 is reduced to a thickness S1 starting from an initial thickness S2 of the product 2. The difference S2-S1 is therefore the thickness of the material removed from the frame 26 by the machine tool 3. The portion of the product 2 illustrated in Figure 2 also has an edge 27, whose thickness is substantially the same as the initial thickness S2 of the product 2, and a central area 28, which is delimited by the edge 27 and the frames 26 and which is shown as a dotted surface in the drawing. The edge 27 is the element that will be connected to the other part of the aeroplane fuselage, whilst the central area 28, being a simple covering without any other special function, does not need to have equally high mechanical strength. It follows, therefore, that the thickness S2-S3 of the central area 28 is further reduced. In other terms, the central area 28 is the area from which the tool 25 removes the largest quantity of material.

Looking in more detail with reference to Figure 2, the tool 25 is a milling cutter and the operation of removing material from the product 2 is substantially a milling operation. The milling operation may, as mentioned above, be alternatively performed paraxially, that is to say, using three continuous interpolation axes, or in inclined planes, that is to say, using three continuous interpolation axes plus three positioning axes, or on shapes oriented in any direction, that is to say, using five or more continuous interpolation axes.

With reference to Figures 1, 3 and 4, the machining unit 6 is advantageously driven by linear electric motors.

The crossbeam 5 is driven in the direction D2 by two linear electric motors 29, 30. Each of the two linear electric motors 29, 30 comprises a primary member or rotor 31 and a secondary member or stator 32.

The two primary members 31 are integral with the mobile crossbeam 5 at two ends of it 5a, 5b, which are opposite each other in longitudinal direction.

The two secondary members 32 consist of two respective parallel slideways 33, 34, each extending along one of the longitudinal guides 10, 11.

During use, as illustrated in Figure 1, the product 2 is positioned on the supporting frame 4 by customary means, which are not illustrated, for gripping and lifting the product 2.

As illustrated in more detail in Figures 3 and 4, the product 2 is placed on the upper face 21 of the frame 4 and made to adhere perfectly against the upper face 21 by switching on the suction means 24.

The sucking action of the suction holes 22 distributed over the surface of the upper face 21 holds the product 2 down securely against the upper face 21 itself. This configuration makes it possible to define a reference system for the subsequent machining step.

In other words, since the product 2 is held down firmly against the upper face 21 of the frame 4, the control unit 16 can, by resetting the dimension of the surface of the face 21 without the product 2 on it and using this as the reference zero dimension, continuously check the thickness of the material at any point on the product 2 by comparing the height of the material at that point with the previously reset reference zero dimension of the upper face 21 itself.

With reference to Figure 3, the upper face 21 of the frame's detachable part 20 has a curved shape designed to accommodate a product 2 that has been previously deformed in such a way as to give it a required curvature. The detachable part 20 of the frame 4 is therefore shaped to match the required curvature of the product 2. In this case, the machining dimensions used by the machining unit 6 of the machine tool 3 to perform the subsequent machining operations do not substantially differ from the dimensions of the product 2 in its final working configuration. The shape of the upper face 21 therefore constitutes the matching shape of the frame 4 relative to the product 2.

As illustrated in Figure 4, on the other hand, the upper face 21 of the detachable part 20 of the frame 4 is substantially flat so as to accommodate a product 2 that has not yet been deformed into a required curved shape but that will be deformed during a subsequent process that is not illustrated. In this case, the machining dimensions used by the machining unit 6 of the machine tool 3 to perform the subsequent machining operations differ substantially from the dimensions of the product 2 in its final working configuration.

The fact that the frame 4 supporting the product 2 has a detachable part 20 makes the apparatus 1 extremely versatile because it enables the apparatus to be rapidly set up to machine different products 2 by simply changing the detachable part 20.

Advantageously, as shown in Figure 2, the material is removed from the different areas 26, 27, 28 of the product 2 in quantities that are substantially inversely proportional to the level of stress that these parts are required to resist when the product 2 is installed.

Thus, the central area 28 is made lighter than the edge 27 which has to be connected to the corresponding edge of another panel forming part of the fuselage and also lighter than the frames 26 which are required to hold the aircraft windows in place.

It is clear, therefore, that the apparatus 1 makes it possible to quickly and economically achieve an optimum balance between the need for light weights on the one hand, and high mechanical strength on the other, in the production of parts for the aerospace industry.

Advantageously, the machining unit 6, under the control of the same control unit 16, can be used not only for selectively removing material from the product 2, but also to perform finishing operations on it such as, for example, boring, countersinking and moulding, without having to transfer the product 2 to other machine tools.

Advantageously, according to known methods which are neither described nor illustrated here, the movements of the slide 7 relative to the supporting element 9 and of the supporting element 9 relative to the crossbeam 5 are driven by linear electric motors.

Unlike chemical erosion processes which have the disadvantage, as mentioned above, of producing metallic sludge that is difficult to recycle, the mechanical milling process produces metallic swarf that can quickly and easily be recycled in a foundry to make other metal products 2.

The invention described can be subject to modifications and variations without thereby departing from the scope of the inventive concept. Moreover, all the details of the invention may be substituted by technically equivalent elements.

## Claims

1. A process for manufacturing products (2) of defined thickness used as parts (17) in aerospace structures, the process being **characterised in that** it comprises at least the step of mechanically removing the material of which the product (2) is made at least from defined and separate areas (26, 27, 28) of the product in order to reduce the thickness of and thus lighten the product (2).

2. The process according to claim 1, **characterised in that** the material is removed to a different extent in each of the defined areas.

3. The process according to claim 1, **characterised in that** the material is removed in quantities that are substantially inversely proportional to the level of stress that the different areas (26, 27, 28) of the product (2) are required to resist.

4. The process according to claim 1, **characterised in that** it comprises, in combination with the step of removing material from the product (2), a further step of mechanically finishing areas (27) of the product that will form, in the product (2) itself, sections for connecting other parts of the structure and/or for joining a plurality of the products.

5. The process according to any of the foregoing claims from 1 to 4, **characterised in that** the material is mechanically removed by milling.

6. The process according to any of the foregoing claims from 1 to 5, **characterised in that** the step of removing the material is performed on a product (2) that is initially substantially flat and comprises a further step of plastically deforming the product (2) in order to give it the shape required to make the part (17) of the structure.

7. The process according to any of the foregoing claims from 1 to 5, **characterised in that** the step of removing the material is performed on a product (2) that is already plastically deformed in the shape required to make the part (17) of the structure.

8. The process according to claim 6 or 7, **characterised in that** it comprises the further step of positioning the product (2) on a supporting frame (4) that is shaped to match it.

9. The process according to claim 8, **characterised in that** it comprises the step of holding the product (2) in position on the frame (4) in contact with a face (21) of the frame (4) and forming the matching shape of the frame, the face (21) constituting a reference system for the step of removing the material.

10. The process according to claim 9, **characterised in that** the step of holding in position is performed by suction through suction means (24).

11. The process according to claim 1, **characterised in that** the step of removing the material is performed by a tool (25) mounted on a tool holder head (8) that can move in space at least along three directions (X, Y, Z) that are perpendicular to each other.

12. The process according to claim 11, **characterised in that** the tool holder head (8) is driven by linear electric motors (29, 30) along at least one of the three perpendicular directions (X, Y, Z).

13. An apparatus for manufacturing products (2) of defined thickness used as parts (17) in aerospace structures, **characterised in that** it comprises at least one tool (25) mounted on a tool holder head (8) that can move in space at least along three directions (X, Y, Z) that are perpendicular to each other, the tool (25) engaging with the product (2) in such a way as to remove the material of which the product is made at least from defined and separate areas (26, 27, 28) of the product in order to reduce the thickness of and lighten the product (2).

14. The apparatus according to claim 13, **characterised in that** it comprises a frame (4) which supports the product (2) and which is shaped to match the product (2) in such a way as to hold the product (2) in a fixed position when it engages with the tool (25).

15. The apparatus according to claim 14, **characterised in that** the supporting frame (4) is shaped to match the product (2) at least at its upper face (21) that engages with the product (2).

16. The apparatus according to claim 15, **characterised in that** the upper face (21) of the frame (4) defines a reference system for driving the tool (25).

17. The apparatus according to any of the foregoing claims from 14 to 16, **characterised in that** it comprises suction means (24) connected to the supporting frame (4) and designed to hold the product (2) in a fixed position relative to the frame (4) itself.

18. The apparatus according to any of the foregoing claims from 13 to 17, **characterised in that** the tool holder head (8) is driven by linear electric motors (29, 30) along at least one of the three perpendicular directions (X, Y, Z).
